# EUROPÄISCHE PATENTSCHRIFT

(11) **EP 1 122 196 B1**
(45) Veröffentlichungstag und Bekanntmachung des Hinweises auf die Patenterteilung: **10.09.2003**
(21) Anmeldenummer: 00115370.9
(22) Anmeldetag: 15.07.2000
(51) Int. Cl.: B65G 57/16

(54) **Thermoformmaschine**
Thermoforming machine
Machine de thermoformage

(30) Priorität: 02.02.2000 DE 10004553
(43) Veröffentlichungstag der Anmeldung: 08.08.2001
(73) Patentinhaber: Gabler Maschinenbau GmbH, D-23568 Lübeck (DE)
(72) Erfinder: Rowedder, Axel, 23623 Ahrenbök (DE)
(74) Vertreter: Valentin, Ekkehard, Dipl.-Ing.

(56) Entgegenhaltungen:
- EP-A- 0 955 150
- GB-A- 1 212 189
- US-A- 1 752 607

## Beschreibung

Die Erfindung betrifft eine Thermoformmaschine zum Formen und Stanzen von tiefgezogenen, becher- oder deckelartigen Artikeln aus thermoplastischem, über einen intermittierenden Folientransport zugeführtem Kunststoff oder dergleichen, umfassend ein mehrere über- bzw. nebeneinanderliegende Artikelreihen bildendes Mehrfach-Form- und Stanzwerkzeug, bestehend aus einem Oberwerkzeug und einem Unterwerkzeug, dem eine die aus der Maschine ausgestoßenen Artikel übernehmende Schieber- oder Fangplatte zugeordnet ist, wobei sich der Fangplatte hinter ihren die Fertigartikel aufnehmenden Ausformungen für jede Artikelstange ,welche durch in einandergestapelte Artikel gebildet wird, mindestens zwei einen Stapelkanal definierende Führungsstangen oder dergleichen anschließen, denen federnd wirkende, dem Kanalinneren mit sägezahnartigen Ausnehmungen zugewandte Artikel-Haltemittel zugeordnet sind.

Zur Herstellung von Deckeln, Bechern, Schalen oder dergleichen im Tiefziehverfahren werden verschiedenste Kunststoffe eingesetzt, darunter zunehmend Polypropylen, das preiswert zur Verfügung steht, jedoch schwierig zu verarbeiten ist. Ein daraus hergestellter Artikel erreicht erst Stunden nach seiner Herstellung seine endgültige Festigkeit. Das Abnehmen bzw. Stapeln der aus dem Werkzeug ausgeworfenen Artikel bereitet daher Schwierigkeiten, weil diese mechanischen Belastungen in axialer und radialer Richtung unterliegen.

Eine bekannte Thermoformmaschine (Patentanmeldung 198 48 627.8-16) mit einer speicherprogrammierbaren Steuerung zum Formen und Stanzen der Artikel besitzt ein ausschwenkbares Unterwerkzeug, dem in einer nachgeschalteten, automatischen Stapel- und Zählvorrichtung eine die nach dem Schwenken des Maschinentisches bzw. des Unterwerkzeuges aus der Maschine ausgestoßenen Artikel in komplementären Ausformungen zu Artikelstangen zusammenführende, verfahrbare Fangplatte zugeordnet ist. Aus dieser werden beim Erreichen der vorgewählten Stückzahl die Artikelstangen in einer maschinenentfernten Übergabeposition auf eine Artikelstangen-Aufnahmeplatte bzw. einen Stapelkorb übergeleitet und von dort entnommen. Die in der Fangplatte hinter den Ausformungsausnehmungen angeordneten, die Stapelkanäle bildenden Stapelstäbe bzw. Führungsstangen sind mit federbelasteten Scharnieren versehen. Sobald ein Fertigartikel zur Abstapelung durch den Werkzeug-Auswerfer und die der Artikelreihe zugehörige Ausformung bzw. -nehmung der Fangplatte geschoben wird und auf die Stapelschamiere auftrifft, klappen die federbelasteten, leichtgängigen Stapelscharniere um, so daß der Fertigartikel ungehindert auf die sich anschließenden Stapelstäbe gelangt. Wenn der größte Durchmesser des Fertigartikels die gegenüberliegend angeordneten Stapelschamiere passiert hat, stellen sich diese unter der Federkraft selbsttätig so weit wie möglich - bis letztendlich gegebenenfalls in ihre Ausgangslage - zurück.

Um einen störungsfreien Betrieb zu gewährleisten, insbesondere für die zuerst eingestapelten Artikel, ist es gerade bei Systemen mit dynamisch bewegten Fangplatten, und damit auf die Artikel wirkenden Massenkräften wie bei der vorbeschriebenen Kippmaschine, und hochdynamischen Auswerfem zur Gewährleistung eines störungsfreien Betriebes nötig, zusätzliche Haltebürsten vorzusehen, die einem Auseinanderfallen der Stapel entgegenwirken. Vor allem dann, wenn ausschließlich Haltebürsten eingesetzt werden, handelt es sich um ausgesprochene Verschleißteile, wobei mitunter schon der kleinste Verschleiß Auswirkungen auf die Produktionssicherheit hat.

Durch die DE 36 24 683 C2 ist für eine gattungsgemäße Thermoformmaschine eine Ausführung einer Rückhaltevorrichtung für einen Stapelkanal bekanntgeworden, bei der der Artikel von komplementären, sägezahnartig ausgebildeten Klinken erfaßt wird. Die Klinken werden dabei über Druckfedern an den Artikel angestellt bzw. -gepreßt. Abgesehen davon, daß es sich um eine aufwendige, feinmechanisch herzustellende und zudem verschmutzungsanfällige Rückhaltevorrichtung handelt, liegt ein großer Nachteil darin, daß von den Druckfedem her Verformungskräfte auf die warmen Artikel wirken. Dieser Nachteil wird aufgrund der schwankenden Produktionsparameter - Folienzuammensetzung, -temperatur, Werkzeugkühlung usw. - die die Artikelgeometrie,- steife und Materialfestigkeit entscheidend beeinflussen, entsprechend noch mehr oder weniger verstärkt. Die Reproduzierbarkeit des Stapelvorgangs und die Produktionssicherheit sind somit unbefriedigend. Die Klinken werden zudem hinsichtlich der kinematischen Funktion auf verschiedene Weisen bewegt. In Abhängigkeit von der Anzahl der eingestapelten Artikel werden die Klinken an ihren Drehpunkten gedreht. Bei vollständiger Belegung der Klinken werden diese parallel zur Stapelachse verschoben. Die damit unvermeidlich einhergehenden verschiedenen Betriebszustände lassen sich nur durch einen erhöhten Kraftschluß mit den sich daraus ergebenden Nachteilen kompensieren.

Der Erfindung liegt daher die Aufgabe zugrunde, bei einer gattungsgemäßen Thermoformmaschine mit geringem Aufwand eine prozeßsichere, reproduzierbare, artikelschonende und von einer bestimmten Bau- bzw. Betriebsweise der Thermoformmaschine unabhängige Artikelentnahme bzw. Artikelstapelung zu ermöglichen.

Diese Aufgabe wird erfindungsgemäß dadurch gelöst, daß die Artikel-Haltemittel insgesamt als Haltefedern ausgebildet und mit einem solchen Stichmaß voneinander beabstandet sind, bei dem der eingestapelte Artikel lose zwischen den komplementären Ausnehmungen der Haltefedern des jeweiligen Stapelkanals aufgenommen ist. Nach dem Ausstoßen des Artikels braucht dieser nur gegen die leichte, radiale Federspannung durchgeschoben zu werden, was so schnell geschieht, daß keine Verformungen am Artikel auftreten können, um danach formschlüssig, unbeeinflußt von äußeren Kräften lose zwischen den Federn zu liegen und von diesen gehalten zu werden. Das den Formschluß ohne externe Kräfte gewährleistende Stichmaß läßt sich dabei im Vorfeld in einfacher Weise unter Berücksichtigung der Schwundwerte und Produktionsparameter so festlegen, daß trotz möglicher Schwankungen der Parameter eine Halterung der übernommenen bzw. eingestapelten Artikel ohne äußeren Kräfteeinfluß erreicht wird, die Artikel somit sicher fixiert werden. Hierbei liegt es im Rahmen der konstruktiven Möglichkeiten, die Haltefedem hinsichtlich des Stichmaßes mehrstufig anzuordnen, beispielsweise in einer ersten Stufe etwas enger und in der sich anschließenden zweiten Stufe etwas größer vorzusehen. Hieraus ergibt sich eine unterschiedliche radiale Zustellung der Aufnahmekerben bezogen auf den Artikelumfang. Vorteilhaft hierbei ist, daß bei der Inbetriebnahme durch eine Variation des Einstapelhubes der Artikel in die erste oder zweite, usw. Stufe fixiert werden kann, um die Beklemmung des Artikels auszuschließen. Es läßt sich damit die Eigenstabilisierung des anwachsenden Artikelstapels berücksichtigen, wobei sich insbesondere die in der Regel einen konischen Korpus aufweisenden Becher durch den Konus beim Stapeleingriff gegenseitig stabilisieren.

Eine bevorzugte Ausführung der Erfindung sieht vor, daß die Haltefedem aus streifenartigen Federstahlbändem geformt sind. Es wird somit eine herstellungstechnisch einfache, standartisierte Haltefeder erreicht, die bei allen bekannten Serienausführungen von Thermoformmaschinen Verwendung finden kann. Wie sich durch Versuche bestätigt hat, lassen sich mit diesen Haltefedem auch unzulänglich ausgeformte Artikel unproblematisch handhaben.

Nach einer Ausgestaltung der Erfindung weisen die Haltefedem eine in Stapelrichtung zum Kanalinnem ansteigende Einlaufschräge auf. Im Zusammenspiel mit der bzw. den über den Umfang des Stapelkanals und damit des aufzunehmenden Artikels verteilt angeordneten Haltefedern läßt sich ein das Stapeln erleichternder Einführtrichter erreichen.

Nach einer Ausführung der Erfindung sind die Haltefedern auf den Stapelkanal definierenden Schraubbolzen angeordnet. Die zur Befestigung der Haltefedern an der Fang- bzw. Stapelplatte ohnehin benötigten Schraubbolzen bilden hier gleichzeitig den Stapelkanal; ausdrückliche bzw. separate Führungsstangen können entfallen. Diese Mehrfachanordnung von Haltefedem ist insbesondere für den Artikel-Einzeltransport ausreichend, weil eine Stapelbildung erst auf der nachgeschalteten Artikelstangen-Aufnahmeplatte bzw. einem nachgeschalteten Stapelkorb erfolgt. Die Länge der Haltefedern ist entsprechend sehr viel kürzer als bei Haltefedem mit Stapelbildung schon gleich in der Fang- bzw. Stapelplatte.

Vor allem dann, wenn eine Stapelbildung beabsichtigt ist, empfiehlt es sich nach Vorschlägen der Erfindung, den mit Haltefedem bestückten Schraubbolzen Führungsstangen zuzuordnen. Eine Alternative sieht vor, daß die Haltefedern direkt auf den Führungsstangen angeordnet sind. In beiden Fällen ist eine zusätzliche Führung für die Artikelstange der ineinandergestapelten Artikel gegeben, wobei einmal kürzere und einmal längere Haltefedem vorgesehen werden müssen.

Weitere Merkmale und Vorteile der Erfindung ergeben sich aus den Ansprüchen und der nachfolgenden Beschreibung, in der Ausführungsbeispiele des Gegenstandes der Erfindung näher erläutert sind. Es zeigen:
- Fig. 1: in der Seitenansicht als Beispiel für eine Thermomaschine eine solche, die als Kippmaschine ausgebildet ist, mit im Ausführungsbeispiel nachgeschalteter Stapel- und Zählvorrichtung für hier gezeigte, abzustapelnde Becher, schematisch dargestellt;
- Fig. 2: als Einzelheit in schematischer Darstellung eine Haltefeder-Anordnung zum vertikalen oder dynamischen horizontalen (wie gezeigt) Transport eines Einzelartikels;
- Fig. 3: als Einzelheit in schematischer Darstellung eine Haltefeder-Anordnung zur statischen horizontalen (wie gezeigt) oder vertikalen Stapelbildung; und
- Fig. 4: als Einzelheit in schematischer Darstellung eine Haltefeder-Anordnung zur dynamischen, horizontalen Stapelbildung.

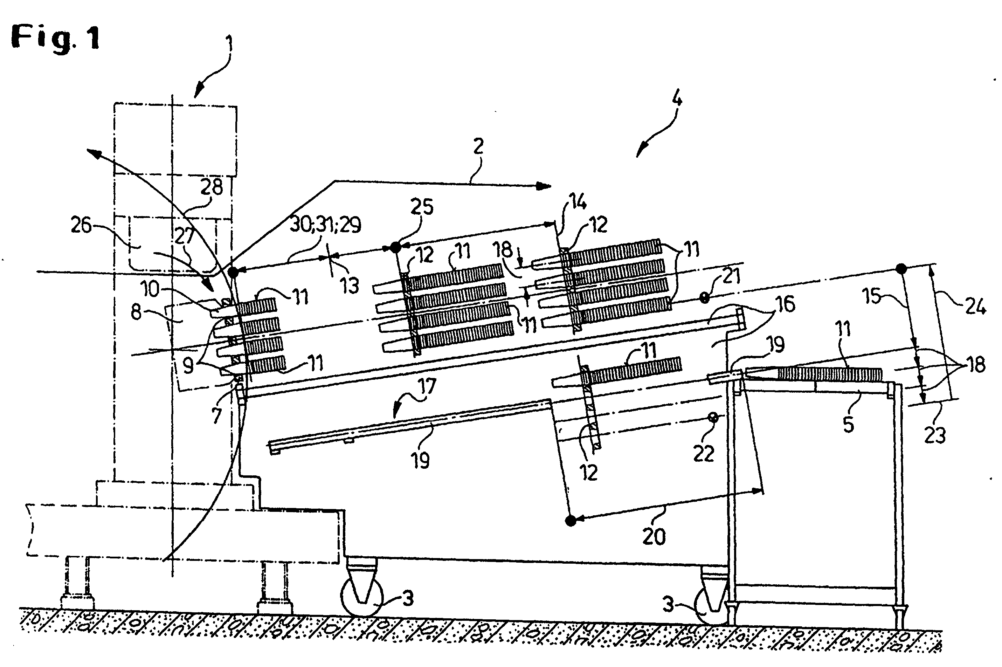

Einer im Ausführungsbeispiel nach Fig. 1 als Kippmaschine ausgeführten Thermoformmaschine wird von einer Seite her ein Kunststoff-Folienband 2 einlaufseitig zugeführt und auslaufseitig gemäß Pfeil auf einer nicht dargestellten Wickelrolle wieder aufgewickelt. Der Thermoformmaschine 1 ist hier eine auf Rädern 3 verfahrbare, automatische Stapel- und Zählvorrichtung 4 sowie dieser ein Transportband 5 nachgeschaltet. Die Stapel- und Zählvorrichtung 4 umfaßt eine verfahrbare Schieber- bzw. Fang- oder Stapelplatte 7, die entsprechend der Anzahl der in dem Unterwerkzeug 8 der Thermoformmaschine 1 in über- und nebeneinanderliegenden Reihen vorgesehenen Formnester eine entsprechende Zahl von Ausformungen bzw. -nehmungen 9 aufweist, in die die Fertigartikel 10 von - nicht dargestellten - Ausstoßem der Thermoformmaschine 1 eingebracht und dort zu Artikelstangen 11 mit einer durch die speicherprogrammierbare Steuerung (nicht gezeigt) der Thermoformmaschine 1 vorgegebenen Anzahl von Fertigartikeln 10 ineinandergestapelt werden. Die Stapel- und Zählvorrichtung 4 weist weiterhin einen Stapelkorb 12 auf, der die Artikelstangen 11 von der Fangplatte 7 übernimmt und aus dem die Artikelstangen 11 auf das Transportband 5 abgegeben werden, beispielsweise um einem weiteren Bearbeitungsvorgang wie einer Bedruckmaschine oder einem Bördelaggregat zugeführt zu werden.

Der Stapelkorb 12 ist zur Abnahme der Artikelstangen 11 in Richtung auf die Fangplatte 7 bis zu einer Übergabeposition 13 verfahrbar und nach der Abnahme der Artikelstangen in eine von der Fangplatte 7 entfernte Entladestation 14 verfahrbar. Der Stapelkorb 12 kann aus dieser Position heraus taktweise abgesenkt werden, und zwar zunächst mit einem großen Senkhub 15 so weit, bis die untere Reihe der Artikelstangen 11 in Flucht mit einer in einem Traggestell 16 der Stapel- und Zählvorrichtung 4 angeordneten Abschiebereinheit 17 liegt, und danach jeweils mit einem dem Höhenmaß 18 der übereinanderliegenden Reihen von Artikelstangen 11 entsprechenden Hub. Die Abschiebereinheit 17, die für jede Artikelstange 11 einen Abschieberstab 19 besitzt und in Richtung des Doppelpfeils 20 hin und her bewegbar ist, schiebt die in Teilhüben sukzessive abgesenkten Artikelstangen auf das Transportband 5 über. Nach jedem Abschiebevorgang wird das Transportband so weit verfahren, daß die Artikelstangen der nächstfolgenden Artikelreihe des Stapelkorbes 12 abgeschoben werden können. Das Absenken des Stapelkorbes 12 wird von zwei Endlagenschaltem 21 bzw. 22 überwacht. Sobald der letzte Abschiebevorgang beendet ist, wird der entleerte Stapelkorb 12 aus seiner untersten Endstellung 23 gemäß Pfeil 24 in die obere Endlage angehoben und anschließend in die Ausgangsposition 25 verfahren, aus der heraus er dann zur Abnahme von während der Zeit des Abschiebens der Artikelstangen in die Fangplatte 7 eingestapelten neuen Fertigartikeln 10 in die Übergabeposition 13 verstellt wird.

Die Fangplatte 7 nimmt nämlich ununterbrochen neue Fertigartikel (Becher) 10 auf, die aus dem auf seinem Weg zu der neben dem Unterwerkzeug 8 auch ein Oberwerkzeug 26 sowie eine nicht gezeigte Heizstation der Thermoformmaschine 1 durchlaufenden Folienband 2 hergestellt werden. Sobald ein der Anzahl der in dem Unterwerkzeug 4 vorgesehenen Formnester entsprechende Abschnitt des Folienbandes zwischen Ober- und Unterwerkzeug 26 bzw. 8 eingelaufen ist, werden bei geschlossenen Werkzeugen die Artikel ausgeformt und -gestanzt. Nach der Fertigstellung wird das Unterwerkzeug 8 in Pfeilrichtung 27 in die in Fig. 1 unten gezeigte Auswurfstellung verschwenkt. Das Unterwerkzeug 8 bestreicht beim Kippen bzw. Ausschwenken einen schematisch als Störradius 28 in Fig. 1 eingezeichneten Bereich, der während der Schwenkbewegung des Unterwerkzeuges 8 von der Fangplatte 7 frei bleiben muß. Die Fangplatte 7 wird daher synchron mit dem Schwenken des Unterwerkzeuges 8 von diesem weggefahren bzw. dem gekippten Werkzeug zugestellt. Dies wird mit einer stets gleichen, einem Aüseinanderziehen der in die Fangplatte schon ineinandergestapelten Fertigartikel 10 entgegenwirkenden Verfahrdynamik erreicht, indem der Verfahrweg 29 der Fangplatte über den für den Störradius 28 des Schwenkweges des Unterwerkzeugs 8 eigentlich benötigten Verfahrweg 30 hinaus verlängert ist und noch durch eine zweite, zusätzliche, harmonisch mit geringer Beschleunigung bzw. Verzögerung zu durchlaufende Wegstrecke 31 ergänzt wird.

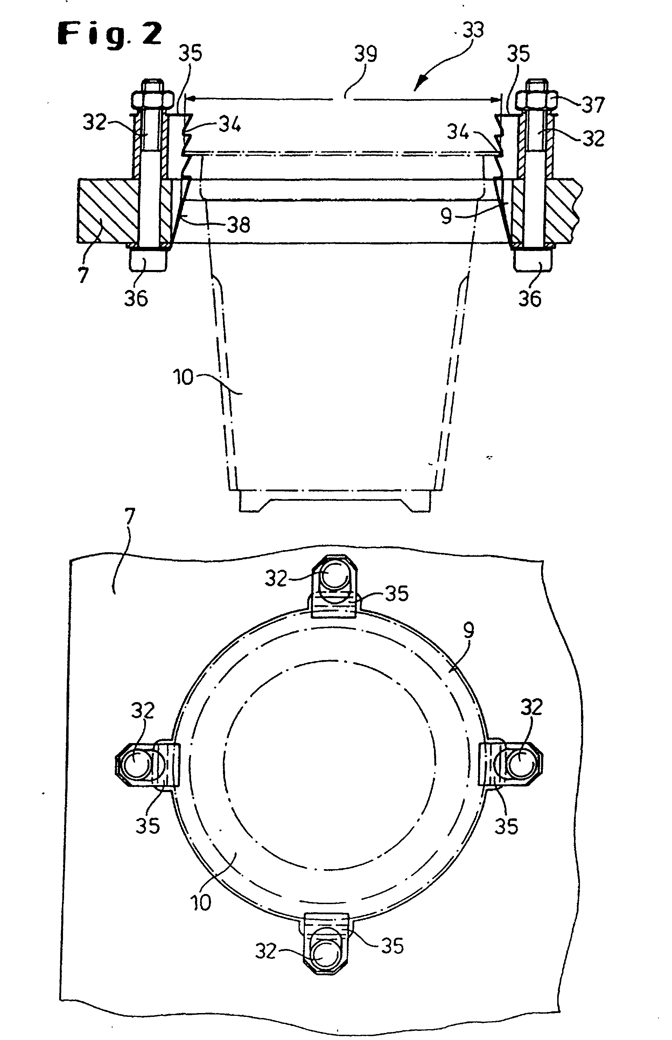

In den Fig. 2 bis 4 sind als Einzelheit, beispielsweise der in Fig. 1 gezeigten, ohne jedoch weder auf diese Art einer Thermoformmaschine noch Artikelübemahme-Schieberplatte oder -Fang- bzw. Stapelplatte beschränkt zu sein, verschiedene Ausführungen zur Übernahme und Stapelung der Artikel (hier Becher) 10 gezeigt. Der Einfachheit halber ist jeweils in der Draufsicht und im Teil-Längsschnitt die Fang- bzw. Stapelplatte 7 mit einer dem entsprechenden Formnest des Werkzeugs der Thermoformmaschine zugeordneten Ausformung 9 dargestellt Bei der vorrangig dem dynamischen horizontalen oder vertikalen Transport eines Einzelartikels 10 dienenden Ausführung nach Fig. 2 bilden vier über den Umfang der Ausformung 9 gleichmäßig verteilt angeordnete Schraubbolzen 32 einen Stapelkanal 33. Unmittelbar auf den Schraubbolzen 32 sind einander mit sägezahnartigen Ausnehmungen 34 zugewandte Haltefedern 35 angeordnet bzw. zwischen dem Schraubkopf 36 und der aufgeschraubten Mutter 37 befestigt. Die aus streifenartigen Federstahlbändem geformten Haltefedern 35 besitzen eine in Stapelrichtung zum Kanalinnern ansteigende Einlaufschräge 38, die sich quasi zu einem den aus der Thermoformmaschine ausgestoßenen Artikel 10 zentrierenden Einführtrichter ergänzen. Die Haltefedern 35 sind mit einem solchen Stichmaß 39, das dem Abstand entspricht, den zwei einander gegenüberliegende Haltefedem 35 mit ihrem Grund der Ausnehmungen 34 einnehmen, voneinander beabstandet, bei dem der ausgestoßene und aufgenommene bzw. eingestapelte Artikel 10 lose, ohne äußere Krafteinwirkung zwischen den komplementären Ausnehmungen 34 bzw. den Haltefedern 35 des jeweiligen Stapelkanals 33 aufgenommen ist. Der Artikel 10, gleich ob es sich um einen Becher, eine Schale, einen Deckel oder dergleichen handelt, wird zwischen den Haltefedem sicher fixiert, ohne dabei einem schädlichen äußeren Einfluß zu unterliegen.

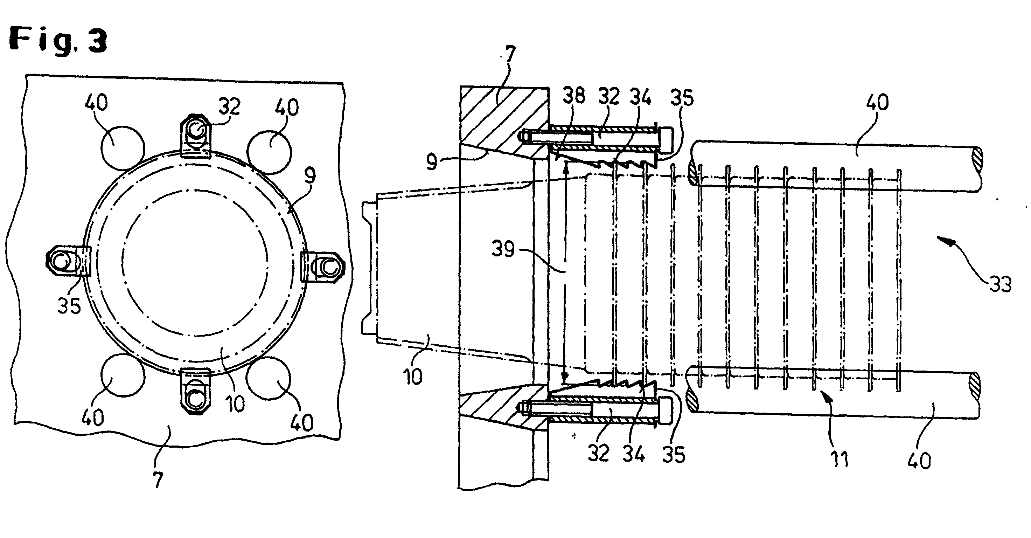

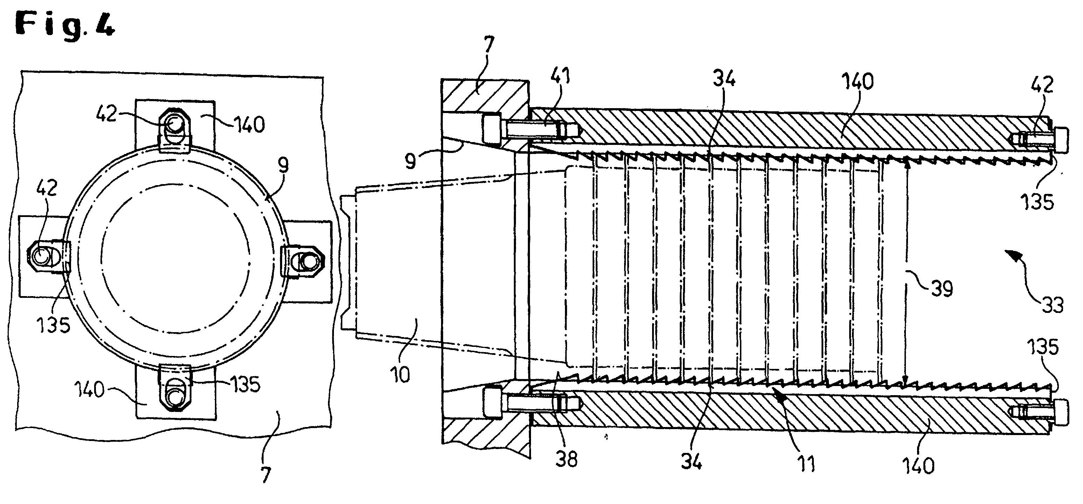

Bei der Ausführung nach Fig. 3 sind neben der über den Umfang verteilten Mehrfachanordnung von Haltefedem 35 zwischen jeweils zwei Haltefederelementen (Schraubbolzen 32 und Haltefeder 35) Stapelstäbe bzw. Führungsstangen 40 vorgesehen. Dies sind den hier - wie auch in Fig. 2 - kurzen Haltefedern 35 hinterlegt und stützen die statisch horizontal gebildete Artikelstange 11 ab, sobald diese den begrenzten Bereich der Haltefedern 35 verlassen hat. Die eine horizontale dynamische Bildung einer Artikelstange 11 aus ineinandergestapelten Bechern 10 zeigende Ausführung nach Fig. 4 weist lange Haltefedem 135 auf, die in ihrer Wirkung aber den kurzen Haltefedem 35 gemäß den Fig. 2 und 3 entsprechen, d.h. der Artikel bzw. Becher 10 wird zunächst gegen die leichte, radiale Federspannung schnell durchgeschoben und danach lose zwischen den Ausnehmungen 34 der komplementären, umfangsverteilt angeordneten Haltefedern 135 fixiert. Die Haltefedem 135 sind in diesem Fall direkt auf den Führungsstangen 140 befestigt, und zwar mittels einmal durch die Fang- bzw. Stapelplatte 7 und gegenläufig von der Stirnseite her in die Führungsstangen 140 eingeschraubten Bolzen 41 bzw. 42. Im Gegensatz zur Stapelführung nach Fig. 3 wird die Artikelstange 11 in dem Stapelkanal 33 ausschließlich zwischen den Haltefedern 135 geführt und gestützt.

Unabhängig davon, ob es sich um eine dynamische oder statische Einzel-Artikelentnahme oder um eine horizontale oder vertikale dynamische bzw. statische Stapelbildung handelt, wird aufgrund der Haltefedern 35 bzw. 135 sichergestellt, daß am Artikel 10 keine Veformungen auftreten. Die Artikel werden formschlüssig, ohne Einwirkung von externen Kräften in dem jeweiligen Stapelkanal 33 gehalten. Die Haltefedem 35, 135 sind verschleiß- und wartungsfrei, kostengünstig herzustellen, universell für die bekannten Maschinenarten einsetzbar und sorgen für eine hohe Reproduzierbarkeit.

## Patentansprüche

1. Thermoformmaschine (1) zum Formen und Stanzen von tiefgezogenen, becher- oder deckelartigen Artikeln aus thermoplastischem, über einen intermittierenden Folientransport (2) zugeführtem Kunststoff oder dergleichen, umfassend ein mehrere über-bzw. nebeneinanderliegende Artikelreihen bildendes Mehrfach-Form- und Stanzwerkzeug, bestehend aus einem Oberwerkzeug (26) und einem Unterwerkzeug (8), dem eine die aus der Maschine ausgestoßenen Artikel (10) übernehmende, Schieber- oder Fangplatte (7) zugeordnet ist, wobei sich der Fangplatte (7) hinter ihren die Fertigartikel (10) aufnehmenden Ausformungen (9) für jede Artikelstange (11) , welche durch in einandergestapelte Artikel gebildet wird, mindestens zwei einen Stapelkanal definierende Führungsstangen oder dergleichen anschließen, denen federnd wirkende, dem Kanalinneren mit sägezahnartigen Ausnehmungen zugewandte Artikel-Haltemittel zugeordnet sind,
**dadurch gekennzeichnet,**
**daß** die Artikel-Haltemittel insgesamt als Haltefedern (35, 135) ausgebildet und mit einem solchen Stichmaß (39) voneinander beabstandet sind, bei dem der eingestapelte Artikel (10) lose zwischen den komplementären Ausnehmungen (34) der Haltefedem (35; 135) des jeweiligen Stapelkanals (33) aufgenommen ist.

2. Thermoformmaschine nach Anspruch 1,
**dadurch gekennzeichnet,**
**daß** die Haltefedern (35; 135) aus streifenartigen Federstahlbändem geformt sind.

3. Thermoformmaschine nach Anspruch 1 oder 2,
**dadurch gekennzeichnet,**
**daß** die Haltefedem (35) auf den Stapelkanal (33) definierenden Schraubbolzen (32) angeordnet sind.

4. Thermoformmaschine nach Anspruch 1 oder 2,
**dadurch gekennzeichnet,**
**daß** die Haltefedern (135) auf den Führungsstangen (140) angeordnet sind.

5. Thermoformmaschine nach einem der Ansprüche 1 bis 3,
**gekennzeichnet durch**
den mit Haltefedern (35) bestückten Schraubbolzen (32) zugeordnete Führungsstangen (40).

6. Thermoformmaschine nach einem der Ansprüche 1 bis 5,
**dadurch gekennzeichnet,**
**daß** die Haltefedern (35; 135) eine in Stapelrichtung zum Kanalinneren ansteigende Einlaufschräge (38) aufweisen.

## Claims

1. A thermoforming machine (1) for the shaping and punching of deep-drawn, bowl- or lid-like articles made of thermoplastic plastics or suchlike fed via an intermittent film transport (2), comprising a multi-cavity moulding and punching tool forming a number of article rows above or beside one another, consisting of an upper tool (26) and a lower tool (8), to which is assigned a slide or catch plate (7) taking over the articles (10) ejected from the machine, whereby the catch plate (7), behind its shaped sections (9) receiving the finished articles (10), is followed by at least two guide rods or suchlike defining a stacking channel for each article pole (11), which is formed by articles stacked inside one another, to which guide rods there are assigned, acting in a spring-mounted manner, article retaining means facing the channel interior with sawtooth-like cutouts,
**characterised in that**
the article retaining means are designed as a whole as retaining springs (35, 135) and are spaced at a distance from one another with a pitch dimension (39) which is such that the stacked-in article (10) is taken up loose between the complementary cutouts (34) of the retaining springs (35; 135) of the respective stacking channel (33).

2. The thermoforming machine according to claim 1,
**characterised in that**
the retaining springs (35; 135) are formed from strip-like spring steel bands.

3. The thermoforming machine according to claim 1 or 2,
**characterised in that**
the retaining springs (35) are arranged on the screw bolt (32) defining the stacking channel (33).

4. The thermoforming machine according to claim 1 or 2,
**characterised in that**
the retaining springs (135) are arranged on the guide rods (140).

5. The thermoforming machine according to any one of claims 1 to 3,
**characterised by**
guide rods (40) assigned to the screw bolts (32) equipped with retaining springs (35).

6. The thermoforming machine according to any one of claims 1 to 5,
**characterised in that**
the retaining springs (35; 135) have a run-in slope (38) rising in the stacking direction to the channel interior.

## Revendications

1. Machine pour thermoformage (1) pour le moulage et le découpage de gobelets ou d'articles ayant la forme d'un couvercle étirés à plat en matériau thermoplastique ou similaire introduits par l'intermédiaire d'un transport de feuilles (2) intermittent, comprenant un outil de moulage et de découpage multiple formant plusieurs rangées d'articles juxtaposées ou superposées, composé d'un moule supérieur (26) et d'un moule inférieur (8), auquel est ordonné un plateau coulissant ou un plateau de capture (7) lequel réceptionne les articles (10) expulsés de la machine, où derrière ses façonnages (9) du plateau de capture (7) réceptionnant les produits finis (10) pour chaque files d'articles (11), laquelle est formée par un empilement d'articles, se raccordent au moins deux tiges-guides ou similaires destinées à un canal d'empilement, pour lesquelles sont prévus des moyens de support d'articles à ressort qui sont dirigés vers l'intérieur du canal avec des creux en dent de scie,
**caractérisé en ce que** les moyens de support des articles sont globalement constitués comme des ressorts de retenue (35, 135) et distants les uns des autres avec une tel espacement (39), pour lequel l'article empilé (10) est maintenu librement entre les creux (34) complémentaires des ressorts de retenue (35, 135) du canal d'empilement (33) respectif.

2. Machine pour thermoformage selon la revendication 1,
**caractérisée en ce que**
les ressorts de retenue (35, 135) sont formés à partir de bandes d'acier à ressort en forme de bande.

3. Machine pour thermoformage selon la revendication 1 ou 2,
**caractérisée en ce que**
les ressorts de retenue (35) sont placés sur les boulons filetés (32) qui définissent le canal d'empilement (33).

4. Machine pour thermoformage selon la revendication 1 ou 2,
**caractérisée en ce que**
les ressorts de retenue (135) sont placés sur les tiges-guides (140).

5. Machine pour thermoformage selon l'une des revendications 1 à 3,
**caractérisée par**
des tiges-guides (40) attribuées aux ressorts de retenue (35) équipés avec des boulons filetés (32).

6. Machine pour thermoformage selon l'une des revendications 1 à 5,
**caractérisée en ce que**
les ressorts de retenue (35, 135) possèdent une gorge oblique (38) verticale dans le sens de la pile en direction des intérieurs de canal.
